# EUROPEAN PATENT APPLICATION

(11) **EP 1 779 731 A2**
(43) Date of publication of application: **02.05.2007**
(21) Application number: 06122414.3
(22) Date of filing: 17.10.2006
(51) Int. Cl.: A21B 1/42, A21B 3/04

(54) **Apparatus for cooking food**

(30) Priority: 21.10.2005 IT MO20050277
(71) Applicant: NILMA S.P.A., 43100 Parma (IT)
(72) Inventor: Paris, Gian Luigi, 43100, Parma (IT)
(74) Representative: Luppi, Luigi

(57) **Abstract**

An apparatus comprises a chamber (3) for cooking a food product provided with an entrance (5) for the entry of said food product inside said chamber (3), which comprises an exit (6) distinct from said entrance opening (5) for the exiting of said food product from said chamber (3).

## Description

The invention relates to an apparatus, in particular an industrial apparatus, comprising a chamber for heat-treating a food product, such as, for example, a cooking chamber.

Industrial apparatuses are known comprising a cooking chamber for cooking food products provided with an opening, from which the food products to be cooked are introduced, and a heating chamber, connected to the cooking chamber and suitable for producing the heat necessary for heating the food products.

The raw foods are prepared and arranged on containers, which are placed in housings provided in a structure of a carriage that is arranged for being introduced into the cooking chamber.

After cooking, the carriage is extracted from the cooking chamber through the opening and the cooked foods are transferred to be further processed, for example by packaging apparatuses.

A drawback of the known apparatuses is that the cooked foods extracted from the cooking chamber have to pass through an environment in which also raw foods are present.

This entails the risk that bacteria that are generally present in the environment in which raw foods are prepared may contaminate the cooked foods that have been sterilised through cooking.

An object of the invention is to improve apparatuses of known type provided with a chamber for heat-treating a food product, in particular a cooking chamber.

Another object is to produce an apparatus provided with a chamber for cooking a food product in which it has been substantially avoided that the cooked food product can be contaminated by a food product that still has to be subjected to cooking.

According to the invention, an apparatus is provided comprising a chamber for cooking a food product provided with an entrance for the entry of said food product inside said chamber, characterised in that said chamber further comprises an exit that is distinct from said entrance for the exiting of said food product from said chamber.

Owing to the invention it is possible to introduce foods to be treated through the entrance and to extract foods that have been heat-treated from the exit, thus eliminating the risk that the treated foods get contaminated by bacteria acting on the foods to be treated, and vice versa.

In an embodiment, the exit is opposite the entrance.

In a further embodiment, the apparatus comprises a casing body positioned in a separating structure for separating a preparation environment of the foods to be treated, for example raw foods, from a further environment in which the already treated foods, for example cooked foods, are processed.

Owing to these embodiments, it is possible to keep the environment in which the foods to be cooked are prepared separate from the environment in which the already cooked foods are processed, in such a way that the apparatus acts as a heat and physical barrier to the diffusion of bacteria. The invention can be better understood and implemented with reference to the enclosed drawings that show an exemplifying and non limitative embodiment thereof, in which:
Figure 1 is a frontal view of an apparatus comprising a chamber for cooking food products;
Figure 2 is a side view taken along the direction A of the apparatus in Figure 1;
Figure 3 is a rear view of the apparatus in Figure 1;
Figure 4 is a plan view of the apparatus in Figure 1.

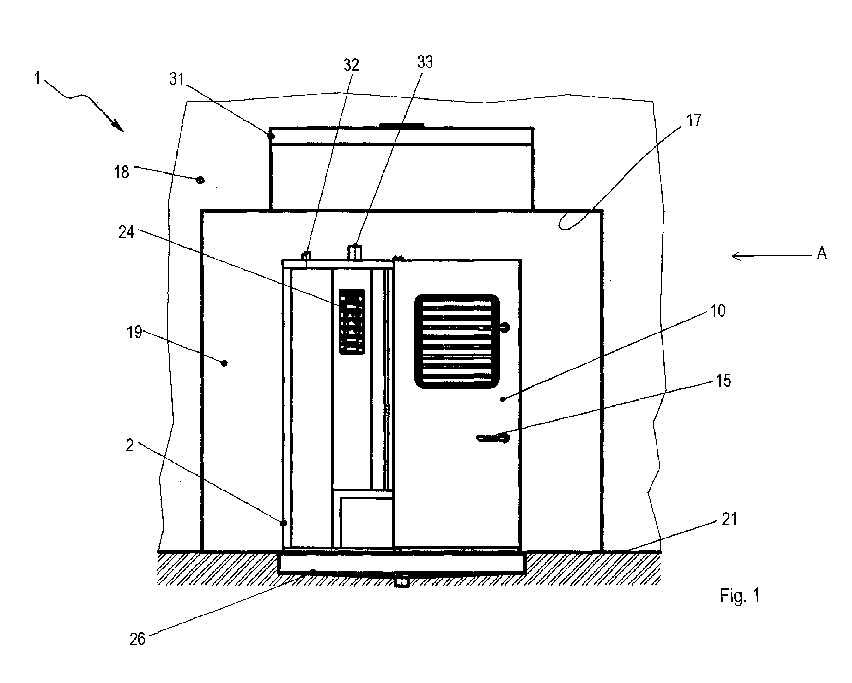

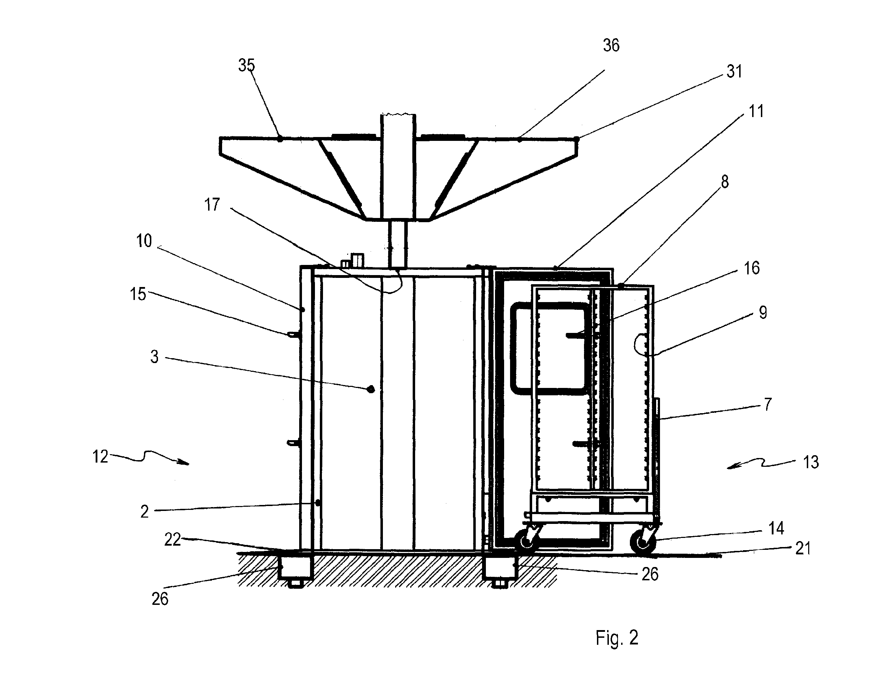

With reference to Figures 1 to 4, there is illustrated an apparatus 1, in particular an industrial apparatus, comprising a cooking chamber 3 for cooking a food product.

The apparatus 1 comprises a frame 2, for example made of stainless steel, in which the cooking chamber 3, which is suitable for receiving the food products to be cooked, and a heating chamber 4, which is connected to the cooking chamber 3 and in which the necessary heat for cooking the products is produced, are obtained.

The cooking chamber 3 can be of mixed type, i.e. in which cooking occurs by means of convection and steam. In this case, the heating chamber 4 comprises a heating element, that can be a set of pipes traversed by combustion fumes produced by a burner or an electric resistor, and a steam generator is provided that is connected to the heating chamber 4. The heating chamber 4 may further comprise a fan to generate forced circulation of air inside the cooking chamber 3. In a version, the heating chamber may be provided with a further fan.

The cooking chamber 3 and the heating chamber 4 may be constructed according to what has been disclosed in Italian patent IT 1225089 in the name of the applicant.

The cooking chamber 3, substantially having the shape of a parallelepipedon, is shaped in such a way as to house a carriage 7, which comprises a structure 8 provided with wheels 14 and with supporting elements 9 suitable for supporting trays or containers, that are not shown, in which the food products to be cooked, i.e. the raw foods, are arranged, and from which the food products, i.e. the cooked foods, are removed. The cooking chamber 3 is provided with an entrance opening 5 for the entry of the carriage 7 provided with the raw foods inside the cooking chamber 3 and with an exit opening 6, distinct from the entrance opening 5, for the exit of the carriage 7 and therefore of the cooked foods.

The entrance opening 5 and the exit opening 6 are arranged on opposite sides of the cooking chamber 3.

The entrance opening 5 is provided with an entrance door 10 that, when closed, separates the cooking chamber 5 from an environment 12 which is external to the cooking chamber 3.

Similarly, the exit opening 6 is provided with an exit door 11 that, when closed, separates the cooking chamber 5 from a further environment 13 which is external to the cooking chamber 3.

The entrance door 10 and the exit door 11 comprise respectively a first handle 15 that is drivable from outside the cooking chamber 3 and a second handle 16 that is drivable from inside the cooking chamber 3.

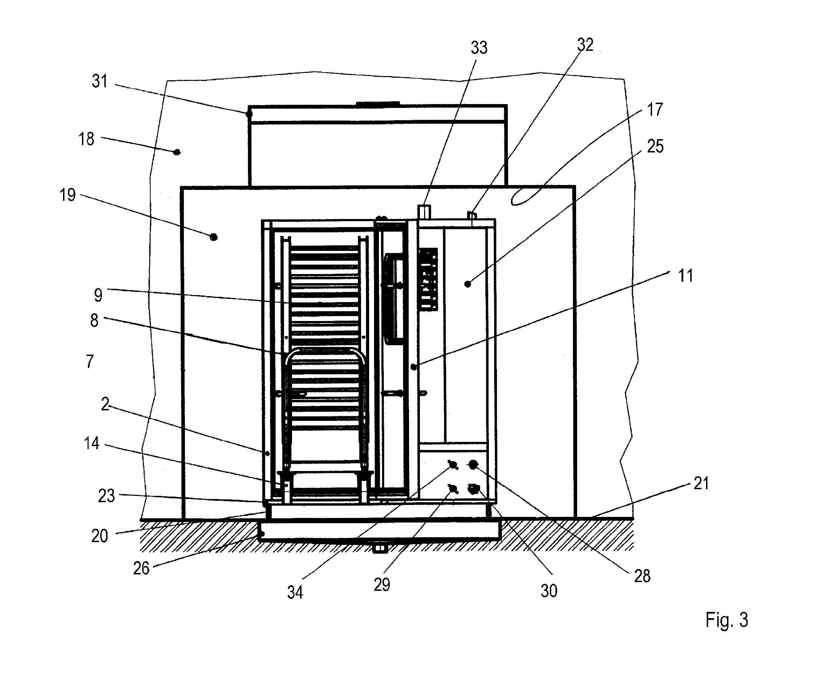

As Figures 1 and 3 show, the frame 2 is positioned in an opening 17 of a dividing wall 18 between the environment 12 in which the raw foods are prepared and the further environment 13, in which the cooked foods are treated.

The frame 2 is mounted centrally in the opening 17 in such a way that the entrance opening 5 faces the environment 12 and the exit opening 6 faces the further environment 13. Between the frame 2 and the opening 17 panels 19 are mounted that are shaped in such a manner as to close an opening portion 17 that is not occupied by the frame 2. The environment 12 and the further environment 13 are thus separated by the dividing wall 18 and by the frame 2, which thus defines a heat and physical barrier between the two environments 12, 13. The entrance door 10 and the exit door 11 enable the environments 12 and 13 to be separated from one another and/or connected together through the cooking chamber 3.

The raw foods, on which bacteria and other microorganisms are generally active, are introduced into the cooking chamber 3 from the environment 12 through the entrance opening 5, and are sterilised in the cooking chamber 3 through the action of the temperature that is reached during cooking, which occurs by keeping both the entrance door 10 and the exit door 11 closed. After cooking, the cooked foods are extracted from the cooking chamber through the exit opening 6, naturally keeping closed the entrance door 10. The cooked foods thus reach the further environment 13, in which there are preset hygienic conditions, without passing through the environment 12.

Owing to the apparatus 1 it is thus possible to limit or even eliminate the risk that the cooked foods get contaminated by bacteria originating from the raw foods.

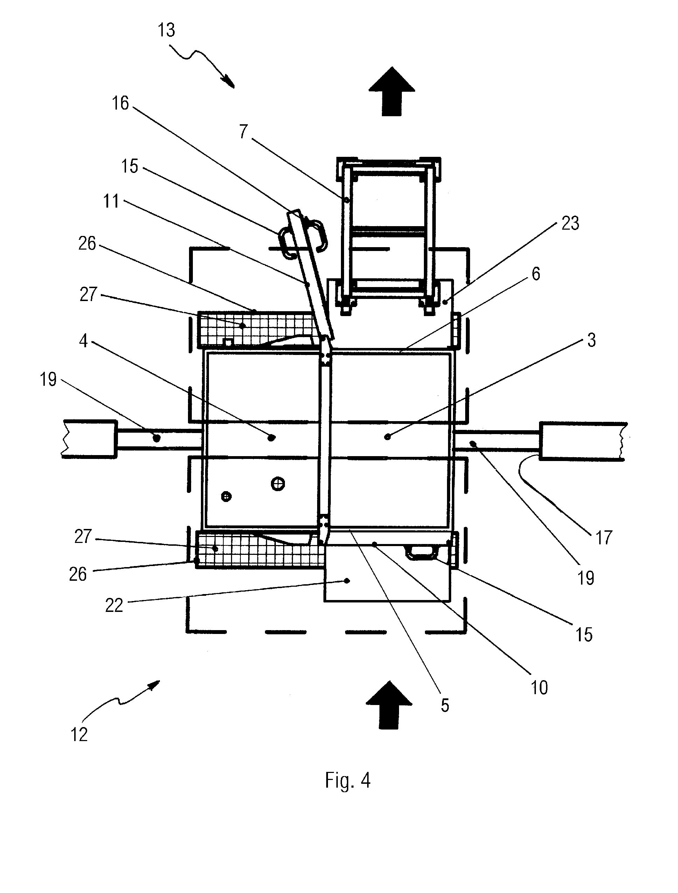

With reference to Figure 3, the frame 2 is supported by feet 20 which are adjustable in such a way that the frame 2 can be drawn near to a base surface 21, in particular a floor. With reference to Figure 4, at the entrance opening 5, in a part of the frame 2 intended for being arranged nearer the base surface 21, there is provided a transit ramp 22, that is tiltable with respect to a plane defining a threshold of the entrance opening 5 to the base surface 21 to enable the carriage 7 to pass through the entrance opening 5 without the wheels 14 being hindered by the frame 2.

Similarly, at the exit opening 11, the frame 2 comprises a further transit ramp 23, that is substantially the same as the transit ramp 22 and which facilitates the exiting of the carriage 7 through the exit opening 11.

The base surface 21 may comprise a collecting and drainage channel 26 for collecting fluids coming from the cooking chamber 3, for example condensed steam, and fluids coming from the containers bearing the food products during the transfer of the carriage 7 near the frame 2, in particular during the entry or the exiting of the carriage 7 into or from the cooking chamber 3. The collecting and drainage channel 26, provided with a grating 27, is therefore provided in a zone of the base surface 21 adjacent to the entrance opening 5 and in a further zone of the base surface 21 adjacent to the exit opening 6. The collecting and drainage channel 26 can furthermore collect fluids used to clean the cooking chamber 3.

The apparatus 1 further comprises a command and control unit 24, that faces both the environment 12 and the further environment 13 and enables a desired cooking programme to be set and cooking to be controlled. An operator can intervene on components of the command and control unit 24 by removing a removable access panel 25.

In the version in which the cooking chamber 3 is of mixed type, the apparatus 1 comprises a steam release flue 32 and a cooking fume release flue 33. The two flues 32, 33 are positioned in an upper zone of the frame 2 arranged in the environment 12.

The apparatus 1 in this version further comprises an electric connection 28 for connecting the apparatus 1 to a mains electricity supply, a water connection 29 for supplying the generator with steam, a further water connection 34 for cooling a conduit connected to the steam release flue 32 so as to reduce by condensation the quantity of steam exiting from the steam release flue 32, and finally a water release connection 30 for enabling condensed steam to exit from the apparatus 1.

Above the frame 2 there is provided a sucking device 31 suitable for sucking fumes and steam exiting from the steam release flue 32, from the cooking fume release flue 33 and from the cooking chamber 3 when the entrance door 10 and/or the exit door 11 are opened after a cooking session. The sucking device 31 comprises a first sucking hood 35 that protrudes into the environment 12 and a second sucking hood 36 that protrudes into the further environment 13.

During installation, the frame 2 is positioned in the opening 17 in such a way that it is supported by the feet 20, which are subsequently adjusted in such a way that the frame 2 is near the base surface 21 between which a sealing material can be interposed. Subsequently, the transit ramps 22 and 23 are tilted towards the base surface 21 and the panels 10 are mounted.

## Claims

1. Apparatus comprising a chamber (3) for cooking a food product provided with an entrance (5) for the entry of said food product inside said chamber (3), **characterised in that** said chamber (3) comprises an exit (6) distinct from said entrance opening (5) for the exiting of said food product from said chamber (3).

2. Apparatus according to claim 1, wherein said exit (6) is arranged in a wall of said chamber (3) opposite a further wall of said chamber (3) in which said entrance (5) is arranged.

3. Apparatus according to claim 1, or 2, wherein said entrance (5) and/or said exit (6) is/are provided with a door (10, 11) for permitting and/or preventing access to said chamber (3).

4. Apparatus according to claim 3, wherein said door (10, 11) is mounted in a casing body (2) of said apparatus (1) .

5. Apparatus according to claim 4 as claim 3 is appended to claim 2, wherein said casing body (2) comprises a bottom wall that bounds said chamber (3) below, a top wall that bounds said chamber (3) above and side walls that connect said wall to said further wall of said chamber (3).

6. Apparatus according to claim 4, or 5, wherein said casing body (2) is positioned in an opening (17) of a separating structure (18) that divides an environment (12) and a further environment (13), in such a way that said chamber (3) is connected to said environment (12) through said entrance (5) and is connected to said further environment (6) through said exit (6).

7. Apparatus according to claim 6, and further comprising panel means (19) that is interposable between said casing body (2) and said opening (17) for closing a portion of said opening (17) not occupied by said casing body (2).

8. Apparatus according to claim 6, or 7, and further comprising sucking means (31) which are external to said casing body (2) suitable for sucking fumes coming from said entrance (5) and/or from said exit (6).

9. Apparatus according to any one of claims 6 to 8 as claim 6 is appended to claim 5, and further comprising channel means (26) obtained in a base surface (21), which is external to said casing body (2) and near said bottom wall, said channel means (26) being suitable for receiving liquids coming from said entrance (5) and/or from said exit (6).

10. Apparatus according to claim 9, wherein said channel means (26) is arranged near said entrance (5) and/or said exit (6).

11. Apparatus according to any preceding claim, wherein said chamber (3) is shaped in such a manner as to house a carriage (7) arranged for conveying said food product inside said chamber (3) and/or outside said chamber (3).

12. Apparatus according to claim 11, and further comprising a transit ramp (22, 23) connected to said entrance (5) and/or to said exit (6) to enable sliding of said carriage (7) into and/or from said chamber (3).

13. Apparatus according to claim 12, wherein said transit dais (22, 23) is tiltable with respect to a plane containing a threshold of said entrance (5) and/or of said exit (6).

14. Apparatus according to any one of claims 11 to 13 as claim 11 is appended to any one of claims 4 to 10, and further comprising foot means (20) projecting from said casing body (2) to enable said casing body (2) to be rested on a resting surface (21), said foot means (20) being extendible and/or retractable in such a way as to respectively move said casing body (2) away from and/or towards said resting surface (21).

15. Apparatus according to any preceding claim, wherein said apparatus (1) comprises a convection and steam generating oven.
